# FASCICULE DE BREVET EUROPEEN

(11) **EP 2 807 124 B1**
(45) Date de publication et mention de la délivrance du brevet: **17.01.2018**
(21) Numéro de dépôt: 13704201.6
(22) Date de dépôt: 25.01.2013
(51) Int. Cl.: C03B 5/027, C03B 5/43, C03C 13/00, F27D 1/00, C03B 37/04, C03C 13/06

(54) **PROCEDE DE PRODUCTION DE LAINE MINERALE**
VERFAHREN ZUR HERSTELLUNG VON MINERALWOLLE
METHOD FOR PRODUCING MINERAL WOOL

(30) Priorité: 27.01.2012 FR 1250796
(43) Date de publication de la demande: 03.12.2014
(73) Titulaire: Saint-Gobain Isover, 92400 Courbevoie (FR)
(72) Inventeur: BEAUFILS, Sébastien, 60190 Cernoy (FR); CLATOT, Richard, 60700 Fleurines (FR)
(74) Mandataire: Saint-Gobain Recherche
(86) Numéro de dépôt international: PCT/FR2013/050152
(87) Numéro de publication internationale: WO 2013/110897

(56) Documents cités:
- WO-A1-00/17117
- WO-A2-2006/103375
- FR-A1- 2 920 152
- US-A- 3 228 778
- US-A- 4 491 951
- US-A- 6 044 667
- US-A1- 2004 092 379

## Description

L'invention se rapporte au domaine de la fusion du verre. Elle concerne plus précisément la fusion électrique de verre destiné à être transformé en laine minérale par fibrage.

Il est connu des demandes WO 00/17117 et WO 2006/103375 des compositions de verre aptes à être fibrées par un procédé de centrifugation interne, c'est-à-dire ayant recours à des centrifugeurs tournant à grande vitesse et percés d'orifices. Ces compositions se caractérisent en particulier par une teneur élevée en alumine (de 16 à 27%) et une teneur élevée en oxydes alcalins (10 à 17%), la teneur en silice allant de 39 à 55%. Les laines minérales ainsi produites présentent des propriétés thermiques (notamment de résistance au feu et aux températures élevées) nettement améliorées par rapport à la laine de verre de composition standard. Ce type de verre peut être fondu dans des fours à flammes ou électriques.

Les fours électriques comprennent une cuve comprenant des parois latérales et une sole constituées de blocs en matériaux réfractaires, et sont dotés d'électrodes amenant un courant électrique au sein du verre fondu. Ce dernier, capable de conduire l'électricité, est chauffé par effet Joule, la masse de verre en fusion constituant la résistance.

Lors de la fusion du type de verre précédemment cité, la cuve des fours électrique est généralement constituée de blocs réfractaires à base d'oxyde de chrome ou comprenant une teneur élevée en oxyde de chrome (au moins 10% en poids). A titre d'exemples, on peut citer la gamme de réfractaires commercialisés sous la marque Zirchrom® par la Société Européenne des Produits Réfractaires (SEPR), qui contiennent par exemple 30% en poids d'oxyde de chrome (Zirchrom® 30) ou 83,5% d'oxyde de chrome (Zirchrom® 85), ou encore les réfractaires vendus sous la référence Monofrax K-3 (28% d'oxyde de chrome) et Monofrax E (75% d'oxyde de chrome) par la société RHI AG. US 6,044,667 décrit par exemple un four électrique pour la fusion du verre comprenant des réfractaires à base d'oxyde de chrome.

Ces réfractaires sont employés du fait de leur très grande résistance à la corrosion par le verre fondu, y compris dans les gammes de températures très élevées rencontrées lors de la fusion électrique de ce type de verres (jusqu'à 1800°C et au-delà dans certaines parties du four).

Les inventeurs ont toutefois observé que dans de telles conditions de production, les orifices des centrifugeurs étaient rapidement obturés par du verre dévitrifié, rendant lesdits centrifugeurs inutilisables et nécessitant leur remplacement.

FR 2920152 décrit des réfractaires fondu et coulé à forte teneur en zircone ayant une résistivité électrique élevée.

L'invention a pour but d'obvier à ces inconvénients en proposant un procédé de fabrication de laine minérale comprenant :
- une étape de fusion permettant d'obtenir un verre fondu dont la composition chimique comprend les constituants suivants, en une teneur pondérale variant dans les limites ci-après définies :

| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |

ladite étape de fusion étant réalisée par fusion électrique dans un four comprenant une cuve en blocs réfractaires et au moins deux électrodes immergées dans le verre fondu, au moins un desdits blocs réfractaires, en contact avec ledit verre fondu, étant en un matériau comprenant au moins 60% en poids d'oxyde de zirconium et moins de 5% en poids d'oxyde de chrome, puis,
- une étape de fibrage dudit verre fondu.

Par « fusion électrique », on entend que le verre est fondu par effet Joule, au moyen d'électrodes immergées dans le bain de verre, à l'exclusion de toute utilisation d'autres moyens de chauffage, tels que des flammes.

L'utilisation, dans au moins une partie de la cuve, de réfractaires à haute teneur en zircone et pauvres en oxyde de chrome permet d'éviter tout bouchage des orifices des centrifugeurs. Ces réfractaires sont appelés dans la suite de la description « matériaux réfractaires à haute teneur en zircone ».

Il s'est avéré que lors de l'utilisation de réfractaires à base d'oxyde de chrome, l'usure progressive des réfractaires, même de très faible ampleur, pollue le verre fondu avec des traces d'oxyde de chrome, lesquelles ont pour effet, dans ce type de verre particulier, d'augmenter très fortement sa température au liquidus. Cette dernière peut alors passer au-dessus de la température au niveau des points froids des centrifugeurs, de l'ordre de 1160°C, provoquant une dévitrification du verre dans ces zones les plus froides et donc le bouchage des orifices.

Par exemple, un verre contenant 43,3% de SiO₂, 21,4% d'Al₂O₃, 5,9% de Fe₂O₃, 15,0% de CaO, 2,5% de MgO, 7,2% de Na₂O et 3,95% de K₂O possède une température au liquidus de 1150°C. Cette température passe à 1200°C après ajout de seulement 100 ppm de Cr₂O₃ et à 1240°C après ajout de 200 ppm de Cr₂O₃.

La teneur en oxyde de zirconium des matériaux à haute teneur en zircone est de préférence d'au moins 85%, notamment 90% et même 92%, afin d'optimiser la résistance du matériau à la corrosion par le verre fondu. Il s'agit, comme pour l'ensemble des teneurs précisées dans le présent texte, de teneurs pondérales.

Selon un mode de réalisation moins préféré, la teneur en oxyde de zirconium peut être comprise entre 60 et 70%. Il peut par exemple s'agir de réfractaires en zircon (ZrSiO₄). Compte tenu de leur moins bonne résistance à haute température, ces réfractaires seront de préférence disposés au niveau de la sole du four.

La teneur en oxyde de chrome est avantageusement d'au plus 1%, notamment 0,5%. Elle est même de préférence nulle, ou en tout état de cause à l'état de traces.

Le matériau réfractaire à haute teneur en zircone comprend de préférence d'autres oxydes que ZrO₂, car les cristaux de ZrO₂ présentent, du fait de changements de phase cristallographique, des caractéristiques de dilatation anormales susceptibles de dégrader les propriétés mécaniques des produits en zircone. De ce fait, le matériau réfractaire à haute teneur en zircone comprend de préférence au moins un oxyde dit « stabilisateur » choisi parmi SiO₂, Al₂O₃, B₂O₃, P₂O₅, Na₂O, CaO, MgO, SrO, BaO. La teneur en oxyde stabilisateur est typiquement comprise dans un domaine allant de 2 à 7%.

Les blocs du matériau réfractaire à haute teneur en zircone peuvent être par exemple en céramique frittée, en béton réfractaire ou encore être des blocs électro-fondus (obtenus par fusion dans un four à arc d'un mélange de matières premières, suivie d'un coulage dans un moule et d'une étape de recuisson).

Les blocs en céramique frittée sont de préférence en zircone stabilisée à l'aide de MgO. Ils comprennent de préférence au moins 92% de ZrO₂, 2 à 5% de MgO, 1 à 3% de SiO₂. A titre d'exemples, on peut citer les réfractaires commercialisés sous les références Ziral 94 par la société Savoie Réfractaires, Zettral 95 GR par la société RHI Glas GmbH ou encore 3004 par la société Zircoa.

Les bétons réfractaires comprennent de préférence 2 à 4% de CaO, et moins de 1% de SiO₂, Al₂O₃ et TiO₂. Il peut s'agir par exemple du produit commercialisé sous la référence 0878 par la société Zircoa.

Lorsqu'il est sous forme de bloc électro-fondu, le matériau réfractaire à haute teneur en zircone comprend de préférence les oxydes SiO₂, Na₂O et Al₂O₃, et présente notamment la composition chimique suivante :

| | |
|---|---|
| ZrO₂ | > 92% |
| SiO₂ | 2-6, 5% |
| Na₂O | 0, 1-1, 0% |
| Al₂O₃ | 0, 4-1, 2% |
| Fe₂O₃+TiO₂ | < 0,6% |
| P₂O₅ | < 0,05% |

A titre d'exemple, on peut citer les réfractaires commercialisés sous la référence ER 1195 par la société SEPR, qui sont des blocs contenant environ 94% de ZrO₂, 4 à 5% de SiO₂, environ 1% de Al₂O₃ et 0,3% de Na₂O.

La résistivité électrique du matériau réfractaire à haute teneur en zircone est de préférence d'au moins 30 Ω.cm, voire 50 Ω.cm à 1500°C pour une fréquence de 100 Hz, afin de stabiliser la consommation électrique lors de la fusion du verre et d'éviter tout court-circuit dans les réfractaires, susceptible d'entraîner leur dégradation.

La cuve du four comprend généralement au moins une ouverture de coulée, située dans la sole de la cuve, ou au niveau d'une paroi latérale. Dans ce dernier cas, l'ouverture est généralement située dans la partie basse d'une des parois.

Les blocs réfractaires à haute teneur en zircone seront préférentiellement disposés dans les parties de la cuve en contact avec du verre fondu à très haute température (par exemple au-dessus de 1600°C ou 1700°C) et/ou soumis à de forts courants de convection.

Les blocs réfractaires formant les parois latérales de la cuve en contact avec le verre fondu sont en un matériau réfractaire à haute teneur en zircone. C'est en effet au niveau des parois que le degré de corrosion des réfractaires par le verre fondu est parmi les plus élevés, du fait de forts mouvements de convection entre les parois latérales et les électrodes.

Il a été observé qu'au moins une partie de la sole est généralement assez faiblement corrodée, et le choix d'un réfractaire à base d'oxyde de chrome, à la fois plus durable et moins coûteux, est alors particulièrement appréciable. De ce fait, au moins une partie, et notamment la totalité, des blocs réfractaires formant la sole sont avantageusement en un matériau réfractaire contenant au moins 20% d'oxyde de chrome.

A titre d'exemples, on peut citer la gamme de réfractaires commercialisés sous la marque Zirchrom® par la Société Européenne des Produits Réfractaires (SEPR), qui contiennent par exemple 30% en poids d'oxyde de chrome (Zirchrom® 30) ou 83,5% d'oxyde de chrome (Zirchrom® 85), ou encore les réfractaires vendus sous la référence Monofrax K-3 (28% d'oxyde de chrome) et Monofrax E (75% d'oxyde de chrome) par la société RHI AG.

Lorsque l'ouverture de coulée est située au niveau d'une paroi latérale de la cuve, les blocs réfractaires formant les parois latérales de la cuve en contact avec le verre fondu et les blocs réfractaires formant ou entourant la ou chaque ouverture de coulée sont de préférence en un matériau réfractaire à haute teneur en zircone, les blocs réfractaires formant la sole étant, de préférence, en un matériau réfractaire contenant au moins 20% d'oxyde de chrome. Dans une telle configuration, la totalité de la sole est en effet très faiblement corrodée.

Lorsque l'ouverture de coulée est située dans la sole de la cuve, au moins une partie des blocs réfractaires formant la sole sont, de préférence, en un matériau réfractaire à haute teneur en zircone. Il s'agit de préférence des blocs réfractaires situés à proximité de l'ouverture de coulée. Les autres blocs réfractaires formant la sole sont alors de préférence en un matériau réfractaire contenant au moins 20% d'oxyde de chrome.

Outre la cuve, le four peut comprendre, ou ne pas comprendre, une superstructure. Le mélange vitrifiable est normalement réparti de manière homogène sur la surface du bain de verre à l'aide d'un dispositif mécanique, et constitue ainsi un écran thermique limitant la température au-dessus du bain de verre, si bien que la présence d'une superstructure n'est pas toujours nécessaire.

Les électrodes sont immergées dans le verre fondu. Elles peuvent être suspendues de manière à plonger dans le bain de verre par le dessus, être installées dans la sole, ou encore être installées dans les parois latérales de la cuve. Les deux premières options sont généralement préférées pour les cuves de grandes dimensions afin de répartir au mieux le chauffage du bain de verre.

Les électrodes sont de préférence en molybdène, voire éventuellement en oxyde d'étain. Le passage de l'électrode en molybdène à travers la sole se fait de préférence par l'intermédiaire d'un porte-électrode en acier refroidi à l'eau.

Le verre fondu présente de préférence une composition chimique comprenant les constituants suivants, en une teneur pondérale variant dans les limites ci-après définies :

| | |
|---|---|
| SiO₂ | 39-46%, de préférence 40-45% |
| Al₂O₃ | 16-27%, de préférence 18-26% |
| CaO | 6-20%, de préférence 8-18% |
| MgO | 0,5-5%, de préférence 0,5-3% |
| Na₂O+K₂O | 9-15%, de préférence 10-13% |
| Fe₂O₃ | 1,5-15%, de préférence 3-8% |
| B₂O₃ | 0-2%, de préférence 0% |
| P₂O₅ | 0-3%, de préférence 0-1% |
| TiO₂ | 0-2%, de préférence 0,1-1%. |

La somme des teneurs en silice et alumine est de préférence comprise entre 57 et 70%, notamment entre 62 et 68%. La teneur en alumine est de préférence comprise dans un domaine allant de 20 à 25%, notamment de 21 à 24%.

La teneur en silice est avantageusement comprise dans un domaine allant de 40 à 44%.

La teneur en magnésie est avantageusement d'au plus 3%, voire 2,5%, afin de minimiser la température au liquidus, et donc la température de fibrage, de manière à optimiser la durée de vie des centrifugeurs.

La teneur en chaux est de préférence comprise dans un domaine allant de 10 à 17%, notamment de 12 à 16%. La somme des teneurs en chaux et magnésie est quant à elle de préférence comprise dans un domaine allant de 14 à 20%, notamment de 15 à 18%. De préférence, la teneur en oxyde de baryum est d'au plus 1%, notamment 0,5%. La teneur en oxyde de strontium est quant à elle de préférence d'au plus 1%, voire 0,5% et même 0,1% ou encore nulle.

La teneur totale en oxydes alcalins (soude et potasse) est de préférence d'au plus 13%, voire 12%. La teneur en Na₂O est avantageusement comprise dans un domaine allant de 4 à 9%, notamment de 5 à 8%, tandis que la teneur en K₂O est avantageusement comprise dans un domaine allant de 3 à 6%.

L'oxyde de fer a un impact positif sur la nucléation et la croissance de germes à basse température, et donc sur la tenue en température de la laine minérale, tout en ne pénalisant pas la température au liquidus. Sa teneur totale (exprimée sous la forme Fe₂O₃, que le fer soit sous forme ferrique ou ferreuse) est de préférence d'au moins 4%, voire 5% et/ou d'au plus 7% ou 6%. Le rédox, qui correspond au rapport entre la teneur en oxyde de fer ferreux et la teneur totale en oxyde de fer, est généralement compris dans un domaine allant de 0,1 à 0,7. Des rédox élevés confèrent au bain de verre une très forte absorption dans les domaines du visible et du proche infrarouge, diminuant de ce fait la température de sole, et augmentant les mouvements de convection dans le four.

P₂O₅ peut être utilisé, à des teneurs comprises entre 0 et 3 %, notamment entre 0,1 et 1,2 % pour augmenter la biosolubilité à pH neutre. L'oxyde de titane procure un effet très sensible sur la nucléation à haute et à basse température de spinelles dans la matrice vitreuse. Une teneur de l'ordre de 1 % ou moins peut se révéler avantageuse.

La teneur pondérale en oxyde de chrome dans le verre fondu (avant l'étape de fibrage) est de préférence d'au plus 0,03%, notamment 0,02%, voire 0,01%, et même 0,005% (50ppm). Il est en effet apparu qu'au-delà de ces teneurs, la température au liquidus du verre augmentait trop fortement, générant l'obturation des orifices susmentionnés. Pour ce faire, le mélange vitrifiable employé ne contiendra généralement de l'oxyde de chrome que sous forme de traces (quelques dizaines de ppm).

De préférence, la teneur totale en SiO₂, Al₂O₃, CaO, MgO, Na₂O, K₂O, Fe₂O₃ (fer total) est d'au moins 90%, notamment 95% et même 97 ou 98%.

Ces compositions sont bien adaptées au procédé de fibrage par centrifugation interne, avec une viscosité à la température de 1400°C généralement de plus de 40 poises, notamment de l'ordre de 50 à 100 poises (1 poise = 0,1Pa.s).

Ces compositions présentent des températures de transition vitreuse élevées, notamment supérieures à 600°C, en particulier supérieures ou égales à 650°C. Leur température supérieure de recuisson (annealing point) est généralement largement supérieure à 600°C, notamment de l'ordre de 670°C ou plus, souvent de 700°C ou plus.

L'étape de fibrage est de préférence réalisée par centrifugation interne, par exemple selon l'enseignement de la demande WO 93/02977. Les compositions sont en effet bien adaptées à ce mode de fibrage, leurs paliers de travail (correspondant à la différence entre la température à laquelle le logarithme décimal de la viscosité vaut 2,5 et la température au liquidus) étant généralement d'au moins 50°C, voire 100°C et même 150°C. Les températures au liquidus sont peu élevées, généralement d'au plus 1200°C, voire 1150°C, et compatibles avec l'utilisation de centrifugeurs. Le procédé de centrifugation interne met en oeuvre des centrifugeurs, aussi appelés assiettes de fibrage, tournant à grande vitesse et percés d'orifices à leur périphérie. Le verre fondu est acheminé par gravité au centre du centrifugeur, et, sous l'effet de la force centrifuge, est éjecté au travers des orifices pour former des filets de verre, lesquels sont étirés vers le bas par des jets de gaz chauds émis par des brûleurs. Les fibres obtenues sont liées entre elles à l'aide d'une composition d'encollage pulvérisée à leur surface, avant d'être réceptionnées et mises en forme pour donner divers produits de laine minérales, comme des rouleaux ou des panneaux.

L'invention a également pour objet des fours électriques spécialement adaptés à la mise en oeuvre du procédé selon l'invention, notamment un four pour la fusion électrique du verre comprenant une cuve en blocs réfractaires et au moins deux électrodes, ladite cuve comprenant des parois latérales et une sole, caractérisé en ce que les bloc réfractaires formant lesdites parois latérales de la cuve en contact avec le verre fondu sont en un matériau comprenant au moins 60% en poids d'oxyde de zirconium et moins de 5% en poids d'oxyde de chrome et en ce qu'au moins une partie, notamment la totalité, des blocs réfractaires formant ladite sole sont en un matériau comprenant au moins 20% d'oxyde de chrome.

De préférence, le four comprend également au moins une ouverture de coulée, notamment située dans la sole de la cuve ou au niveau d'une paroi latérale.

Les caractéristiques préférées évoquées précédemment en relation avec le procédé selon l'invention sont bien évidemment applicables au four selon l'invention, et ne sont pas répétées ici dans un souci de concision.

Il est également décrit une laine minérale obtenue par le procédé selon l'invention, notamment une laine minérale comprenant des fibres de verre dont la composition chimique comprend les constituants suivants, en une teneur pondérale variant dans les limites ci-après définies :

| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |
| ZrO₂ | 0,05-1%. |

Les fibres de verre présentent de préférence une composition chimique comprenant les constituants suivants, en une teneur pondérale variant dans les limites ci-après définies :

| | |
|---|---|
| SiO₂ | 39-46%, de préférence 40-45% |
| Al₂O₃ | 16-27%, de préférence 18-26% |
| CaO | 6-20%, de préférence 8-18% |
| MgO | 0,5-5%, de préférence 0,5-3% |
| Na₂O+K₂O | 9-15%, de préférence 10-13% |
| Fe₂O₃ | 1,5-15%, de préférence 3-8% |
| B₂O₃ | 0-2%, de préférence 0% |
| P₂O₅ | 0-3%, de préférence 0-1% |
| TiO₂ | 0-2%, de préférence 0,1-1% |
| ZrO₂ | 0,05-1%, de préférence 0,1-0,8%. |

La somme des teneurs en silice et alumine est de préférence comprise entre 57 et 70%, notamment entre 62 et 68%. La teneur en alumine est de préférence comprise dans un domaine allant de 20 à 25%, notamment de 21 à 24%.

La teneur en silice est avantageusement comprise dans un domaine allant de 40 à 44%.

La teneur en magnésie est avantageusement d'au plus 3%, voire 2,5%, afin de minimiser la température au liquidus, et donc la température de fibrage, de manière à optimiser la durée de vie des centrifugeurs.

La teneur en chaux est de préférence comprise dans un domaine allant de 10 à 17%, notamment de 12 à 16%. La somme des teneurs en chaux et magnésie est quant à elle de préférence comprise dans un domaine allant de 14 à 20%, notamment de 15 à 18%. De préférence, la teneur en oxyde de baryum est d'au plus 1%, notamment 0,5%. La teneur en oxyde de strontium est quant à elle de préférence d'au plus 1%, voire 0,5% et même 0,1% ou encore nulle.

La teneur totale en oxydes alcalins (soude et potasse) est de préférence d'au plus 13%, voire 12%. La teneur en Na₂O est avantageusement comprise dans un domaine allant de 4 à 9%, notamment de 5 à 8%, tandis que la teneur en K₂O est avantageusement comprise dans un domaine allant de 3 à 6%.

L'oxyde de fer a un impact positif sur la nucléation et la croissance de germes à basse température, et donc sur la tenue en température de la laine minérale, tout en ne pénalisant pas la température au liquidus. Sa teneur totale (exprimée sous la forme Fe₂O₃, que le fer soit sous forme ferrique ou ferreuse) est de préférence d'au moins 4%, voire 5% et/ou d'au plus 7% ou 6%.

P₂O₅ peut être utilisé, à des teneurs comprises entre 0 et 3 %, notamment entre 0,1 et 1,2 % pour augmenter la biosolubilité à pH neutre. L'oxyde de titane procure un effet très sensible sur la nucléation à haute et à basse température de spinelles dans la matrice vitreuse. Une teneur de l'ordre de 1 % ou moins peut se révéler avantageuse.

La teneur pondérale en oxyde de chrome dans le verre fondu (avant l'étape de fibrage) est de préférence d'au plus 0,03%, notamment 0,02%, voire 0,01%, et même 0,005% (50ppm). Il est en effet apparu qu'au-delà de ces teneurs, la température au liquidus du verre augmentait trop fortement, générant l'obturation des orifices susmentionnés. Pour ce faire, le mélange vitrifiable employé ne contiendra généralement de l'oxyde de chrome que sous forme de traces (quelques dizaines de ppm).

La teneur en zircone est de préférence comprise dans un domaine allant de 0,1 à 0,8%, notamment de 0,2 à 0,6%, voire de 0,3 à 0,5%. La présence de zircone dans le verre peut améliorer la tenue en température et au feu des fibres, même à faible teneur.

De préférence, la teneur totale en SiO₂, Al₂O₃, CaO, MgO, Na₂O, K₂O, Fe₂O₃ (fer total) est d'au moins 90%, notamment 95% et même 97 ou 98%.

## Revendications

1. Procédé de fabrication de laine minérale comprenant :
- une étape de fusion permettant d'obtenir un verre fondu dont la composition chimique comprend les constituants suivants, en une teneur pondérale variant dans les limites ci-après définies :
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |
ladite étape de fusion étant réalisée par fusion électrique dans un four comprenant une cuve en blocs réfractaires et au moins deux électrodes immergées dans le verre fondu, les blocs réfractaires formant les parois latérales de la cuve, en contact avec ledit verre fondu, étant en un matériau comprenant au moins 60% en poids d'oxyde de zirconium et moins de 5% en poids d'oxyde de chrome, puis
- une étape de fibrage dudit verre fondu.

2. Procédé selon la revendication 1, tel que le verre fondu présente une composition chimique comprenant les constituants suivants, en une teneur pondérale variant dans les limites ci-après définies :
| | |
|---|---|
| SiO₂ | 39-46% |
| Al₂O₃ | 16-27% |
| CaO | 6-20% |
| MgO | 0,5-5% |
| Na₂O+K₂O | 9-15% |
| Fe₂O₃ | 1,5-15% |
| B₂O₃ | 0-2% |
| P₂O₅ | 0-3% |
| TiO₂ | 0-2%. |

3. Procédé selon l'une des revendications précédentes, tel qu'au moins un des blocs réfractaires, en contact avec le verre fondu est en un matériau comprenant au moins 85% en poids d'oxyde de zirconium et moins de 1% en poids d'oxyde de chrome.

4. Procédé selon l'une des revendications précédentes, tel qu'au moins une partie, et notamment la totalité, des blocs réfractaires formant la sole sont en un matériau réfractaire contenant au moins 20% d'oxyde de chrome.

5. Procédé selon l'une des revendications précédente, tel que les blocs du matériau comprenant au moins 60% en poids d'oxyde de zirconium et moins de 5% en poids d'oxyde de chrome sont en céramique frittée, en béton réfractaire ou sont des blocs électro-fondus.

6. Procédé selon l'une des revendications précédentes, tel que la cuve du four comprend au moins une ouverture de coulée située dans la sole de la cuve.

7. Procédé selon la revendication précédente, tel qu'au moins une partie des blocs réfractaires formant la sole sont en un matériau comprenant au moins 60% en poids d'oxyde de zirconium et moins de 5% en poids d'oxyde de chrome, les autres blocs réfractaires formant la sole étant en un matériau réfractaire contenant au moins 20% d'oxyde de chrome.

8. Procédé selon l'une des revendications 1 à 6, tel que, l'ouverture de coulée étant située au niveau d'une paroi latérale de la cuve, les blocs réfractaires formant les parois latérales de la cuve en contact avec le verre fondu et les blocs réfractaires formant ou entourant l'ouverture de coulée sont en un matériau comprenant au moins 60% en poids d'oxyde de zirconium et moins de 5% en poids d'oxyde de chrome, les blocs réfractaires formant la sole étant en un matériau réfractaire contenant au moins 20% d'oxyde de chrome.

9. Procédé selon l'une des revendications précédentes, tel que l'étape de fibrage est réalisée par centrifugation interne.

10. Procédé selon l'une des revendications précédentes, tel qu'avant l'étape de fibrage, le verre fondu contient une teneur pondérale en oxyde de chrome d'au plus 0,03%, notamment 0,01%.

11. Procédé selon l'une des revendications précédentes, tel que la laine minérale obtenue comprend des fibres de verre dont la composition chimique comprend les constituants suivants, en une teneur pondérale variant dans les limites ci-après définies :
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |
| ZrO₂ | 0,05-1%. |

12. Four pour la fusion électrique du verre comprenant une cuve en blocs réfractaires et au moins deux électrodes, ladite cuve comprenant des parois latérales et une sole, **caractérisé en ce que** les bloc réfractaires formant lesdites parois latérales de la cuve en contact avec le verre fondu sont en un matériau comprenant au moins 60% en poids d'oxyde de zirconium et moins de 5% en poids d'oxyde de chrome et **en ce qu'**au moins une partie des blocs réfractaires formant ladite sole sont en un matériau comprenant au moins 20% d'oxyde de chrome.

13. Four selon la revendication précédente, comprenant au moins une ouverture de coulée située dans la sole de la cuve.

14. Four selon la revendication précédente, tel qu'au moins une partie des blocs réfractaires formant la sole sont en un matériau comprenant au moins 60% en poids d'oxyde de zirconium et moins de 5% en poids d'oxyde de chrome, les autres blocs réfractaires formant la sole étant en un matériau réfractaire contenant au moins 20% d'oxyde de chrome.

## Patentansprüche

1. Verfahren zur Herstellung von Mineralwolle, das Folgendes umfasst:
- eine Fusionsphase, die es ermöglicht, geschmolzenes Glas zu erhalten, dessen chemische Zusammensetzung die folgende Bestandteile umfasst, deren Gewichtsanteile innerhalb der unten definierten Grenzen variieren:
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |
wobei die genannte Fusionsphase mittels elektrischer Fusion in einem Ofen erfolgt, der ein Becken aus feuerfesten Blöcken und mindestens zwei in das geschmolzene Glas getauchte Elektroden besteht, sodass die feuerfesten Blöcke die Seitenwände für das Becken bilden, die in Kontakt mit dem genannten geschmolzenen Glas stehen, und aus einem Material sind, das zu mindestens 60% des Gewichts aus Zirkoniumoxid und weniger als 5% des Gewichts aus Chromoxid besteht, dann
- eine Phase der Zerfaserung des genannten geschmolzenen Glases.

2. Verfahren nach dem Anspruch 1, bei dem das geschmolzene Glas eine chemische Zusammensetzung aufweist, die folgende Bestandteile umfasst, deren Gewichtsanteile innerhalb der unten definierten Grenzen variieren:
| | |
|---|---|
| SiO₂ | 39-46% |
| Al₂O₃ | 16-27% |
| CaO | 6-20% |
| MgO | 0,5-5% |
| Na₂O+K₂O | 9-15% |
| Fe₂O₃ | 1,5-15% |
| B₂O₃ | 0-2% |
| P₂O₅ | 0-3% |
| TiO₂ | 0-2%. |

3. Verfahren nach einem der vorangegangenen Ansprüche, bei dem mindestens einer der feuerfesten Blöcke, die in Kontakt mit dem geschmolzenen Glas sind, aus einem Material besteht, das zu mindestens 85% seines Gewichts aus Zirkoniumoxid und weniger als 1% seines Gewichts aus Chromoxid besteht.

4. Verfahren nach einem der vorangegangenen Ansprüche, wobei mindesten ein Teil und insbesondere die Gesamtheit der feuerfesten Blöcke, die den Boden bilden, aus einem feuerfesten Material bestehen, das mindestens 20% Chromoxid enthält.

5. Verfahren nach einem der vorangegangenen Ansprüche, wobei die Blöcke aus dem Material, das mindestens 60% Gewicht Zirkoniumoxid und mindestens 5% Gewicht Chromoxid enthält, aus gesinterter Keramik, aus feuerfestem Beton oder aus schmelzgegossenen Blöcken bestehen.

6. Verfahren nach einem der vorangegangenen Ansprüche, wobei das Becken des Ofens über mindestens eine Abgussöffnung am Boden des Beckens verfügt.

7. Verfahren nach dem vorangegangenen Anspruch, wobei mindestens ein Teil der feuerfesten Blöcke, die den Boden bilden, aus einem Material sind, das mindestens zu 60% des Gewichts aus Zirkoniumoxid und weniger als 5% des Gewichts aus Chromoxid besteht und die weiteren feuerfesten Blöcke, die den Boden bilden, aus einem feuerfesten Material, das mindestens zu 20% aus Chromoxid besteht.

8. Verfahren nach einem der Ansprüche 1 bis 6, bei dem sich die Abgussöffnung auf Höhe einer Seitenwand des Beckens befindet, die Blöcke, die die Seitenwände des Beckens bilden, in Kontakt mit dem geschmolzenen Glas sind und die feuerfesten Blöcke, die die Abgussbildung öffnen oder sie einfassen, aus einem Material bestehen, das zumindest zu 60% des Gewichts aus Zirkoniumoxid und zu weniger als 5% des Gewichts aus Chromoxid bestehen, wobei die feuerfesten Blöcke, die den Boden bilden, aus einem feuerfesten Material sind, das mindestens 20% Chromoxid enthält.

9. Verfahren nach einem der vorangegangenen Ansprüche, wobei die Phase der Verfaserung durch interne Zentrifugierung stattfindet.

10. Verfahren nach einem der vorangegangenen Ansprüche, wobei das geschmolzene Glas vor der Phase der Verfaserung einen gewichtsmäßigen Gehalt an Chromoxid von höchstens 0,03%, insbesondere 0,01% aufweist.

11. Verfahren nach einem der vorangegangenen Ansprüche, wobei die erhaltene Mineralwolle Glasfasern umfasst, deren chemische Zusammensetzung die folgenden Bestandteile mit einem variablen Gewichtsanteil innerhalb der im Folgenden definierten Grenzwerte umfasst:
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |
| ZrO₂ | 0,05-1%. |

12. Ofen zur elektrischen Fusion des Glases, der ein Becken aus feuerfesten Blöcken und mindestens zwei Elektroden umfasst, wobei das genannten Becken über Seitenwände und einen Boden verfügt, **dadurch gekennzeichnet, dass** die feuerfesten Blöcke, die die genannten Seitenwände des Beckens bilden, die in Kontakt mit dem geschmolzenen Glas sind, aus einem Material bestehen, das mindestens aus 60% des Gewichts aus Zirkoniumoxid und weniger als 5% des Gewichts aus Chromoxid besteht und dadurch, dass mindestens ein Teil der feuerfesten Blöcke, die den genannten Boden bilden, aus einem Material ist, das mindestens 20% Chromoxid umfasst.

13. Ofen nach dem vorangegangenen Anspruch, der mindestens über eine Abgussöffnung im Boden des Beckens verfügt.

14. Ofen nach dem vorangegangenen Anspruch, wobei mindestens ein Teil der feuerfesten Blöcke, die den Boden bilden, aus einem Material sind, das mindestens zu 60% des Gewichts aus Zirkoniumoxid und weniger als 5% des Gewichts aus Chromoxid besteht und die weiteren feuerfesten Blöcke, die den Boden bilden, aus einem feuerfesten Material, das mindestens zu 20% aus Chromoxid besteht.

## Claims

1. A process for the manufacture of mineral wool comprising:
- a melting stage which makes it possible to obtain a molten glass, the chemical composition of which comprises the following constituents, in a content by weight varying within the limits defined below:
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |
said melting stage being carried out by electric melting in a furnace comprising a tank made of refractory blocks and at least two electrodes immersed in the molten glass, said refractory blocks forming the sidewalls of the tank, in contact with said molten glass, being made of a material comprising at least 60% by weight of zirconium oxide and less than 5% by weight of chromium oxide, then
- a stage of fiberizing said molten glass.

2. The process as claimed in claim 1, such that the molten glass exhibits a chemical composition comprising the following constituents, in a content by weight varying within the limits defined below:
| | |
|---|---|
| SiO₂ | 39-46% |
| Al₂O₃ | 16-27% |
| CaO | 6-20% |
| MgO | 0.5-5% |
| Na₂O+K₂O | 9-15% |
| Fe₂O₃ | 1.5-15% |
| B₂O₃ | 0-2% |
| P₂O₅ | 0-3% |
| TiO₂ | 0-2%. |

3. The process as claimed in either of the preceding claims, such that at least one of the refractory blocks in contact with the molten glass is made of a material comprising at least 85% by weight of zirconium oxide and less than 1% by weight of chromium oxide.

4. The process as claimed in one of the preceding claims, such that at least a portion and in particular all of the refractory blocks forming the bottom are made of a refractory material comprising at least 20% of chromium oxide.

5. The process as claimed in one of the preceding claims, such that the blocks of the material comprising at least 60% by weight of zirconium oxide and less than 5% by weight of chromium oxide are made of sintered ceramic or of refractory concrete or are electrocast blocks.

6. The process as claimed in one of the preceding claims, such that the tank of the furnace comprises at least one casting opening located in the bottom of the tank.

7. The process as claimed in the preceding claim, such that at least a portion of the refractory blocks forming the bottom are made of a material comprising at least 60% by weight of zirconium oxide and less than 5% by weight of chromium oxide, the other refractory blocks forming the bottom being made of a refractory material comprising at least 20% of chromium oxide.

8. The process as claimed in one of claims 1 to 6, such that, the casting opening being located on a sidewall of the tank, the refractory blocks forming the sidewalls of the tank in contact with the molten glass and the refractory blocks forming or surrounding the casting opening are made of a material comprising at least 60% by weight of zirconium oxide and less than 5% by weight of chromium oxide, the refractory blocks forming the bottom being made of a refractory material comprising at least 20% of chromium oxide.

9. The process as claimed in one of the preceding claims, such that the fiberizing stage is carried out by internal centrifugation.

10. The process as claimed in one of the preceding claims, such that, before the fiberizing stage, the molten glass comprises a content by weight of chromium oxide of at most 0.03%, in particular 0.01%.

11. The process as claimed in one of the preceding claims, such that the mineral wool obtained comprises glass fibers, the chemical composition of which comprises the following constituents, in a content by weight varying within the limits defined below:
| | |
|---|---|
| SiO₂ | 39-55% |
| Al₂O₃ | 16-27% |
| CaO | 3-35% |
| MgO | 0-5% |
| Na₂O+K₂O | 9-17% |
| Fe₂O₃ | 0-15% |
| B₂O₃ | 0-8% |
| ZrO₂ | 0.05-1%. |

12. A furnace for the electric melting of the glass comprising a tank made of refractory blocks and at least two electrodes, said tank comprising sidewalls and a bottom, **characterized in that** the refractory blocks forming said sidewalls of the tank in contact with the molten glass are made of a material comprising at least 60% by weight of zirconium oxide and less than 5% by weight of chromium oxide and **in that** at least a portion of the refractory blocks forming said bottom are made of a material comprising at least 20% of chromium oxide.

13. The furnace as claimed in the preceding claim, comprising at least one casting opening located in the bottom of the tank.

14. The furnace as claimed in the preceding claim, such that at least a portion of the refractory blocks forming the bottom are made of a material comprising at least 60% by weight of zirconium oxide and less than 5% by weight of chromium oxide, the other refractory blocks forming the bottom being made of a refractory material comprising at least 20% of chromium oxide.
